# EUROPEAN PATENT APPLICATION

(11) **EP 4 425 830 A1**
(43) Date of publication of application: **04.09.2024**
(21) Application number: 23159868.1
(22) Date of filing: 03.03.2023
(51) Int. Cl.: H04L 9/40, H04L 9/32, G05B 19/418

(54) **AUTHENTICATION IN A DISTRIBUTED MANUFACTURING AUTOMATION SYSTEM**

(71) Applicant: BASF SE, 67056 Ludwigshafen am Rhein (DE)
(72) Inventor: GAU, Sebastian, 67061 Ludwigshafen am Rhein (DE)
(74) Representative: BASF IP Association

(57) **Abstract**

The present subject matter relates to an authentication method in a distributed manufacturing automation system (100, 200). The distributed manufacturing automation system (100, 200) is configured as an automation pyramid comprising a plurality of levels. The method comprises: receiving, from a user of a level (117) of the automation pyramid, herein referred to as source level, a data access request for data in a set of systems of another level (115) of the automation pyramid, herein referred to as target level, the data access request comprising a token, the token comprising a set of sub-tokens for authentication against the set of systems respectively; sending the set of sub-tokens to the set of systems; receiving, from the set of systems, a set of verification values respectively; using the set of verification values for authenticating the user against the set of systems respectively.

## Description

### Technical Field

Various example embodiments relate to automation systems, and more particularly to an apparatus and method for authentication in a distributed manufacturing automation system.

### Background

The access to data in a distributed manufacturing automation system may be one of the most important tasks for monitoring the manufacturing processes. However, the data may be vulnerable to unauthorized access, tampering or deletion.

### Summary

Example embodiments provide an authentication method in a distributed manufacturing automation system. The distributed manufacturing automation system is configured in accordance with a level structure of an automation pyramid comprising a plurality of levels. The method comprises: receiving, from a user of a level of the automation pyramid, herein referred to as source level, a data access request for data in a set of systems potentially residing in another level of the automation pyramid, herein referred to as target level, the data access request comprising a token, the token comprising a set of sub-tokens for authentication against the set of systems respectively; sending the set of sub-tokens to the set of systems; receiving, from the set of systems, a set of verification values respectively; using the set of verification values for authenticating the user against the set of systems respectively.

Example embodiments provide a computer program product comprising a computer-readable storage medium having computer-readable program code embodied therewith, the computer-readable program code configured to implement the method of the preceding example embodiments.

The computer program product may be a computer program. The computer program product may refer to any set of one, or more, storage media (also called "mediums") collectively included in a set of one, or more, storage devices that collectively include machine readable code corresponding to instructions and/or data for performing computer operations specified in the computer program product claim. A "storage device" may be any tangible device that can retain and store instructions for use by a computer processor.

Example embodiments provide a client system for a distributed manufacturing automation system. The distributed manufacturing automation system is configured as an automation pyramid comprising a plurality of levels. The client system is configured for: receiving, from a user of a level of the automation pyramid, herein referred to as source level, a data access request for data in a set of systems of another level of the automation pyramid, herein referred to as target level, the data access request comprising a token, the token comprising a sub-token for authentication against each system of the set of systems; sending the set of sub-tokens to the set of systems; receiving, from the set of systems, a set of verification values respectively; using the set of verification values for authenticating the user against the set of systems respectively.

Example embodiments provide a computer program product, said computer program product comprising a computer readable storage medium having stored thereon a supertoken comprising: a set of sub-tokens for authentication of a user of a given level of an automation pyramid with a set of systems of another level of the automation pyramid.

Example embodiments provide a data structure being stored in a computer-readable storage medium, the data structure comprising a set of sub-tokens for authentication of a user against a set of systems of a distributed manufacturing automation system respectively.

### Brief Description of the Drawings

The accompanying figures are included to provide a further understanding of examples, and are incorporated in and constitute part of this specification. In the figures:
FIG.1 depicts a distributed manufacturing automation system in accordance with an example of the present subject matter;
FIG. 2 depicts a distributed manufacturing automation system in accordance with an example of the present subject matter;
FIG. 3 depicts a computer system for data enablement in accordance with an example of the present subject matter;
FIG. 4 depicts a computer system for generating a token in accordance with an example of the present subject matter;
FIG. 5 depicts a structure of a supertoken in accordance with an example of the present subject matter;
FIG. 6 depicts a computer system for data enablement in accordance with an example of the present subject matter;
FIG. 7 is a flowchart of a method for data enablement in accordance with an example of the present subject matter;
FIG. 8 is a flowchart of a method for generating a supertoken in accordance with an example of the present subject matter;
FIG. 9 is a flowchart of a method for monitoring a supertoken in accordance with an example of the present subject matter;
FIG. 10 depicts a computer system for generating a token in accordance with an example of the present subject matter;
FIG. 11 is a pseudocode for defining a method and its arguments in accordance with an example of the present subject matter;
FIG. 12 is a computer system in accordance with an example of the present subject matter.

### Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

Automation, in the context of manufacturing, may refer to the use of devices such as sensors, actuators, robots and computers to automate manufacturing processes. The manufacturing process may, for example, refer to the steps of a method used to prepare a composition. The manufacturing process may be a production of biochemicals or chemicals such as solvents, amines, resins, glues, electronic-grade chemicals, industrial gases, basic petrochemicals, and inorganic chemicals. The manufacturing process may involve the use of manufacturing facilities such as equipment, raw materials, machinery, tools, plant etc. The manufacturing process may have one or more properties (herein referred to as manufacturing properties). Examples of manufacturing properties may comprise the temperature, the pressure, the process time, the melting point of a substance, the flexural strength of a steel, the resistance of an electrical conductor etc. The manufacturing process may have one or more parameters (herein referred to as manufacturing parameters) that enable control of the manufacturing process. Examples of manufacturing parameters may comprise mixing rate, temperature etc. Automation, and thus control, of the manufacturing process may be performed by acquiring process data, analysing the process data and automatically adjusting a manufacturing parameter based on the analysis. The process data may comprise values of one or more manufacturing properties of the manufacturing process. Different types of control may be provided depending on the acquired process data and/or type of the analysis and/or type of controlled manufacturing parameters. For example, one type of control may check property values against thresholds and adapt one or more manufacturing parameters accordingly. Another type of control may perform a more sophisticated (time consuming) analysis of the manufacturing property in order to adjust one or more manufacturing parameters. The different types of control may have different time frames of the control e.g., the control may be real-time or non-real time control. Each type of control of the manufacturing process may have a respective time frame within which the control of the manufacturing process may have to be performed.

The control of the manufacturing process may advantageously be performed by a distributed manufacturing automation system. The distributed manufacturing automation system may comprise dispersed manufacturing facilities and various devices which may be spread across multiple systems located in different locations. The distributed manufacturing automation system may be implemented in accordance with a functional model in order to enable the different types of control of the manufacturing process. The functional model may define a function of individual devices, how data is exchanged and formatted within the distributed manufacturing automation system, and how the devices are interconnected within the distributed manufacturing automation system. In one example, the functional model may be the ISA-95 functional model. The functional model may, for example, be a hierarchical pyramidal model.

The distributed manufacturing automation system being configured as an automation pyramid means that the distributed manufacturing automation system is implemented in accordance with a functional model which is a hierarchical pyramidal model. The hierarchical pyramidal model and the automation pyramid may interchangeably be used herein. The hierarchical pyramidal model may define sets of functions to realize specific types of control of the manufacturing process. The function may be performed by one or more devices of the distributed manufacturing automation system. The hierarchical pyramidal model may further define the information flow in the distributed manufacturing automation system, the information flow enabling the sets of functions. For example, the functional model may describe a hierarchical arrangement of devices of the distributed manufacturing automation system according to a field level, control level, supervision level and information level. The field level may be the lowest level which may include field devices such as sensors and actuators. The field devices may be configured to transfer the process data of the manufacturing process to the next higher level for monitoring and analysis. For example, sensors may convert real time manufacturing properties such as temperature and pressure into sensor data. The sensor data may further be transferred to a controller so as to analyse the real time properties. Actuators may convert electrical signals from controllers into mechanical means to control the manufacturing process. The control level may consist of various controllers such as Programmable Logic Controllers (PLCs) which may acquire the manufacturing properties from various sensors. The controllers may drive actuators based on the processed sensor data and control technique. The supervision level may consist of monitoring devices that enable intervening functions, supervising various manufacturing properties, setting production targets, historical archiving, setting machine start and shutdown, etc. The information level may manage the whole distributed manufacturing automation system. The tasks of this level may include production planning, customer and market analysis, orders and sales etc.

The distributed manufacturing automation system may advantageously be configured for data enablement in accordance with the present subject matter. The data related to the manufacturing process may securely be enabled by the distributed manufacturing automation system. For example, an application (*APP*) may be provided. The application *APP* comprises instructions that when executed perform at least part of the present subject matter in order to enable access to data. The application *APP* may be installed and executed in a system, herein named a client system, of the distributed manufacturing automation system. The client system may belong to a specific level, herein referred to as source level, of the distributed manufacturing automation system. The source level may further comprise other systems than the client system. The client system may be any device of the source level that may run the application *APP.*

The application *APP* may receive a token request from a user of the source level. The user may refer to an entity e.g., an individual, a group of individuals, a computer, or an application executing on a computer. The user may be part of a system of the source level or have access to a system of the source level. The token request may be a request of a token to authenticate the user against a set of systems of another level, herein referred to as target level, in order to access and process (e.g., analyse) the data by the user. This may enable a secure access to data because it is controlled by tokens. In one alternative example, the token may further be used to authenticate the user against the application *APP.* This may provide another layer of verification that may further improve the data security. The authentication may refer to a process of verifying one or more values in the token for proving an assertion such as assertion of an identity of the user. The verification process may, for example, be performed by comparing the values of the token with reference values or pre-defined values e.g., that are based on what is known about the user.

The token may be named a supertoken as it is a single token that contains other sub-tokens. The supertoken may be a data structure. The set of systems may be referred to as backend systems. The set of backend systems may comprise a number L of backend systems referred to as *BS*₁*,* ... , *BS_{L}* respectively. The set of backend systems *BS*₁*,* ... , *BS_{L}* may be all systems of the target level. This may be advantageous as it may enable access to a larger amount of data in comparison to using a subset of systems. Alternatively, the set of backend systems *BS*₁*,* ... , *BS_{L}* may a selected part of the systems of the target level. This may particularly be advantageous in case the systems of the target level provide different types of data while only one specific type is needed by the user. Upon receiving the token request, the application *APP* may generate the supertoken and send the supertoken to the user. The supertoken may comprise a set of sub-tokens for authentication of the user against the set of backend systems respectively. The set of sub-tokens may be obtained from the set of backend systems respectively. The supertoken may further be used to authenticate the user against the application *APP.* The application *APP* may, for example, control the set of backend systems to create and provide the set of sub-tokens respectively. The application *APP* may generate or create the supertoken using the sub-tokens received from the set of backend systems. Generating the supertoken upon request may be advantageous as it may provide *on demand* and only necessary tokens and may thus save resources that would otherwise be required by an unconditional generation of supertokens.

Alternatively, the application *APP* may automatically generate the supertoken for the user and send the supertoken to the user. The application *APP* may automatically generate the supertoken as described above using the sub-tokens. For example, the application *APP* may identify users of the source level (e.g., using a configuration file of the distributed manufacturing automation system) and may generate for each user of the users a supertoken that enables the user to access data in the systems of the target level. In this case, the supertoken may be provided for all systems of the target level. This may be advantageous as it may save time for processing individual token requests to generate the supertokens.

The supertoken may be a single token comprising sub-tokens for authentication against each backend system of the set of backend systems *BS*₁*,* ..., *BS_{L}.* That is, the supertoken may comprise a number *L* of sub-tokens which may be referred to as *ST*₁*,* ..., *ST_{L}* respectively. Each subtoken *STᵢ* may be provided by the respective backend system *BSᵢ,* where *i* varies between 1 and *L.* The sub-token *STᵢ* may comprise identifying user data (*UDᵢ*) to authenticate the user by the backend system *BSᵢ.* The sub-token *STᵢ* may be provided as a string. For example, the sub-token *STᵢ* may be a string of information that contains the user data *UDᵢ* and the sub-token expiration time. Alternatively, the sub-token *STᵢ* may be a non-expiring token. The sub-token *STᵢ* may be provided such that it can be decoded or read by the backend system *BSᵢ.* The supertoken may optionally further comprise user data (*UD*₀) to authenticate the user by the application *APP.* The user data *UD*₀*, UD*₁*,* ... and *UD_{L}* may be at least partially different. This may enable a secure authentication because it can be based on different user identifying information such as user name, user address, user ID etc. For example, the user data are different, that is *UDₗ* ≠ *UDₖ* if *l* ≠ *k.* Alternatively, the user data *UD*₀*, UD*₁*,* ... and *UD_{L}* may be the same user data. The user data *UD*₀*, UD*₁*,* ... and *UD_{L}* may be used to perform a multi-factor authentication according to which the user data *UD*₀ is provided as a global authentication factor and the user data *UD*₁*,* ... , *UD_{L}* are provided as system specific authentication factors.

The supertoken may be valid for a certain time period e.g., one day, which is referred to as the lifetime of the supertoken. After that lifetime period, the supertoken expires. The lifetime of the supertoken may be defined by an expiration time value that is stored within the supertoken. By reading that expiration time value, it may be determined whether the supertoken is expired or not. Alternatively, if the lifetime of the supertoken is defined as function of the lifetimes of the sub-tokens, it may be sufficient to read the lifetimes encoded in the respective sub-tokens to determine whether the supertoken is expired or not. After expiration of the supertoken, the user may request to generate a new supertoken as needed or it may be generated automatically. The lifetime of the supertoken may be defined by the user or automatically defined by the application *APP.*

The present subject matter may thus provide an optimal method for user authentication by generation of container tokens that contain a number of sub-tokens depending on the systems needed by the user. The supertoken may be used by the user one or more times to authenticate against the set of backend systems. This repeated authentication may be performed while the supertoken is not expired. A successful authentication with the supertoken may enable the user to subsequently use data of the set of backend systems *BS*₁*,* ..., *BS_{L}.*

After receiving the supertoken, the user may use the supertoken one or more times. For example, the user may send a data access request to the application *APP.* The data access request may comprise the supertoken. In one example, the application *APP* may authenticate the user using the user data *UD*₀ of the supertoken. The result of the authentication may be a verification value *R*₀. The verification value *R*₀ may have a first value indicating that the user is successfully authenticated against the application *APP* or a second value indicating that the user is not authenticated against the application *APP.* In one example, the authentication against the set of backend systems may be performed using the sub-tokens only if the user is authenticated against the application *APP.* Alternatively, the application *APP* may authenticate the user using the user data *UD*₀ of the supertoken after the authentication of the user against the set of backend systems is performed. The application *APP* may send the set of sub-tokens *ST*₁*,* ..., *ST_{L}* contained in the supertoken to the respective backend system *BS*₁*,* ..., *BS_{L}.* Alternatively, the application *APP* may send the whole supertoken to each backend system of the set of backend systems *BS*₁*,* ... , *BS_{J},* and each of the set of backend systems may get or extract its respective sub-token from the supertoken. Each backend system *BSᵢ* of the set of backend systems may perform a verification of the received respective sub-token *STᵢ,* and may send to the application *APP* a result or verification value *Rᵢ* of the verification. The verification value *Rᵢ* may have a first value indicating that the user is successfully authenticated against the backend system *BSᵢ* or a second value indicating that the user is not authenticated against the backend system *BSᵢ.*

In one first authentication example, the application *APP* may use the set of verification values *R*₁*,* ... , *R_{L}* to authenticate the user. For example, if all the verification values *R*₁*,* ... , *R_{L}* are first values, the application *APP* may determine that the user is successfully authenticated against the set of backends systems *BS*₁*,* ..., *BS_{L}.* However, if the verification values *R*₁, ..., *R_{L}* comprise at least one second value, this may indicate that the user is not authenticated against the set of backends systems *BS*₁*,* ..., *BS_{L}.* This first authentication example may be referred to as a multi-factor authentication according to which the user data *UD*₁*,* ..., *UD_{L}* are provided as system specific authentication factors.

In one second authentication example, the application *APP* may use the set of verification values *R*₁, ... , *R_{L}* as well as the verification value *R*₀ to authenticate the user. For example, if all the verification values *R*₀*, R*₁*,* ..., *R_{L}* are first values, the application *APP* may determine that the user is successfully authenticated against the set of backends systems *BS*₁*,* ... , *BS_{L}* and against the application *APP.* However, if the verification values *R*₀*, R*₁, ... , *R_{L}* comprise at least one second value, this may indicate that the user is not authenticated. This second authentication example may be referred to as a multi-factor authentication according to which the user data *UD*₀ is provided as a global authentication factor and the user data *UD*₁, ..., *UD_{L}* are provided as system specific authentication factors.

In one third authentication example, the application *APP* may use the set of verification values *R*₁, ... , *R_{L}* as well as the verification value *R*₀ to authenticate the user. If a subset of verification values *R*₀*, R*₁, ..., *R_{L}* are first values, the application *APP* may determine that the user is successfully authenticated. For example, if the verification value *R*₀ is a first value and one or more verification values of the verification values *R*₁, ... , *R_{L}* are first values, the application *APP* may determine that the user is successfully authenticated. However, the user may access only data of the one or more backend systems that provided said one or more verification values.

After successful authentication, the set of backends systems *BS*₁*,* ... , *BS_{L}* may be used for data access by the user. Data access may comprise data read and/or write access. The present subject matter may thus enable an efficient authentication method by checking against individual systems of the target level and optionally checking against the application *APP.* The authentication against the set of backend systems *BS*₁, ... , *BS_{L}* may further be advantageous in case that set of backend systems *BS*₁, ... , *BS_{L}* is not a subset of the systems (but all systems) for which the supertoken is generated, because it may save resources for generation of sub-tokens by backend systems which are not used for data access.

In an alternative example, the user may send a data access request to the application *APP.* The data access request may comprise the supertoken in addition to an indication of a subset of *J* backend systems *BS*₁, ... , *BS_{J}* of the set of backend systems *BS*₁, ... , *BS_{L}* (for which the supertoken is generated), where 1 < *J* < *L.* In one example, the application *APP* may authenticate the user using the supertoken, and only if the user is authenticated against the application *APP* the authentication against the set of backend systems may be performed. Alternatively, the application *APP* may authenticate the user against the application after the authentication of the user against the set of backend systems is performed. The application *APP* may send the set of sub-tokens *ST*₁, ... , *ST_{J}* contained in the supertoken to the respective backend system *BS*₁, ..., *BS_{J}.* Alternatively, the application *APP* may send the whole supertoken to each backend system of the set of backend systems *BS*₁, ... , *BS_{J}*, and each of the backend systems may extract its respective sub-token from the supertoken. Each backend system *BSⱼ* of the set of backend systems may perform a verification of the received respective sub-token *STⱼ*, and may send to the application *APP* a result or verification value *Rⱼ* of the verification, where *j* varies between 1 and *J*. The verification value *Rⱼ* may have a first value indicating that the user is authenticated against the backend system *BSⱼ* or a second value indicating that the user is not authenticated against the backend system *BSⱼ.* The application *APP* may use the set of verification values *R*_{1,} ... , *R_{J}* (and *R*₀) to authenticate the user according to the first. second and third authentication examples described above. For example, if all the verification values *R*₁, ... , *R_{J}* are first values, the application may determine that the user is authenticated against the set of backends systems *BS*₁, ..., *BS_{J}.* However, if the verification values *R*₁*,* ..., *R_{J}* comprise at least one second value, this may indicate that the user is not authenticated against the subset of backends systems *BS*₁, ..., *BS_{J}.* This example may be advantageous as it may save resources that would otherwise be required for authentication against backend systems (*BS*_{*J*+1}, ... , *BS_{L}*) which may not be used by the user. This example may further be advantageous in case the supertoken is generated for all backend systems (e.g., automatically) because the user may choose any subset of systems of the target level to access data.

For example, each backend system *BSᵢ* of the set of backend systems may perform a verification of the received respective sub-token *STᵢ* by performing a verification test as follows. The backend system *BSᵢ* may comprise a first numerical value and the associated sub-token *STᵢ* may comprise a second numerical value *UDᵢ*, wherein the verification test may be the difference between the first numerical value and the second numerical value, in which case the verification test would be considered to be passed, if the difference is less than or equal to a predetermined tolerance value. Additionally, the application *APP* may comprise a first numerical value and the supertoken may comprise a second numerical value *UD*₀, wherein the verification test by the application *APP* may be the difference between the first numerical value and the second numerical value, in which case the verification test would be considered to be passed, if the difference is less than or equal to the predetermined tolerance value.

Hence, for each backend system of the set of backend systems *BS*₁, ..., *BS_{L}* a generation method is performed for generating a sub-token for a user and an authentication method is performed to authenticate the user against the each backend system using the generated sub-token. The present subject matter may advantageously implement the generation and the authentication methods. For that, for each backend system *BSᵢ*, the generation and the authentication methods may be performed according to a respective authentication protocol herein referred to as *AUTᵢ.* This may result in a set of authentication protocols *AUT*₁,..., *AUT_{L}* being used to generate the sub-tokens and perform authentication based on them. The set of authentication protocols may be different at least partially, meaning that the set of authentication protocols may comprise zero or more subsets of the set authentication protocols, wherein the subset comprises the same authentication protocols. In one example, the set of authentication protocols are different, that is *AUTᵢ* ≠ *AUTₖ* if *i* ≠ *k.* This may be advantageous as it may improve the data security compared to using the same authentication protocol for all backend systems. Alternatively, the set of backend systems *BS*₁, ... , *BS_{L}* may be split into multiple subsets of backend systems, wherein each subset of backend systems may be associated with a distinct authentication protocol so that the generation and the authentication steps of each sub-token of said subset of backend systems may be performed by the same authentication protocol. The authentication protocol may, for example, comprise a Basic access authentication protocol, a Password Authentication Protocol (PAP), an Extensible Authentication Protocol (EAP), Lightweight Directory Access Protocol (LDAP), Open Authorization (OAuth) protocol or JSON Web Tokens (JWTs) protocol.

The generation of the supertoken and the authentication using the supertoken may be performed using an authentication protocol *AUT*₀ such as JWT protocol. In one example, the authentication protocol *AUT*₀ may be different from the set of authentication protocols *AUT*₁,..., *AUT_{L}* used for generation of the set of sub-tokens. This may further improve the data security because different authentication procedures are employed at different levels, rendering their breach more difficult.

The present subject matter may further improve the data security of the distributed manufacturing automation system by controlling the time during which the supertoken can be used. This control may be performed by assigning a specific lifetime to the supertoken and/or by revoking the supertoken at a certain point of time.

In one example, the lifetime may be assigned to the supertoken regardless of the sub-tokens comprised in the supertoken. This may be advantageous because the sub-tokens may not have a limited lifetime. This may further be advantageous as it may enable the application *APP* to autonomously control the lifetime of the supertoken. Alternatively, the lifetime may be assigned to the supertoken by making use of the lifetimes of the sub-tokens. In one example, the lifetime of the supertoken may be the shortest lifetime of the lifetimes of the set of sub-tokens. This may be advantageous in case the user needs data from every system of the set of backend systems in order to perform a (meaningful) analysis. That is, if data cannot be retrieved from one backend system of the set of backend systems, the result of the analysis of the data may not be correct. Alternatively, the lifetime of the supertoken may be the longest lifetime of the lifetimes of the set of sub-tokens. This means that the supertoken expires only when all sub-tokens have expired. This may be advantageous in case the data provided by the set of backend systems is of the same type. That is, even if data cannot be retrieved from one or more backend systems, the result of the analysis of the data from the remaining systems may still be correct although based on lesser amount of data. For example, if the backend systems provide training data for training a machine learning algorithm, the training can be performed even with data received from a single backend system. Alternatively, the lifetime of the supertoken may be the average of the lifetimes of the set of sub-tokens. This may be advantageous as it provides a trade-off between the first and second examples. That is, although the data provided by the set of backend systems may be of the same type, the analysis of the data may require a certain minimum amount of data. This minimum amount of data may be provided by the backend systems whose lifetimes are longer than the average lifetime. If the supertoken is expired, the application *APP* may consider that each sub-token of the supertoken has expired (regardless of their lifetimes being lapsed or not).

Revoking the supertoken may be performed by the application *APP* by revoking each sub-token of the set of sub-tokens of the supertoken. Alternatively, revoking the supertoken may be performed by revoking at least one sub-token of the set of sub-tokens of the supertoken. This may enable to control the revoking of the supertoken at the application *APP* level. In another example, the application *APP* may check if any sub-token of the sub-tokens has been revoked by the respective backend system and if so, the application *APP* may determine that the supertoken is revoked. The supertoken may be revoked by replacing it by another supertoken or by deleting the supertoken. In one example, the supertoken may be revoked by revoking each sub-token of the supertoken. The revocation of each sub-token may, for example, be performed in accordance with the authentication protocol according to which the sub-token has been created. For example, the supertoken may be revoked by changing the JWT secret e.g., with which the token is signed. The JWT secret may be generated using a cryptographic random number generator. The JWT secret may, for example, be stored in a database such as the AZURE Key Vault. Alternatively, the token may be revoked by redeploying the application *APP* (where application *APP* may be an API) automatically based on a predefined deployment pipeline.

Thus, by checking whether the supertoken is expired or revoked, the access to data of the set of backend systems may be efficiently controlled. In one example, after successful authentication of the user with the set of backend systems, the application *APP* may enable access to data to each backend system of the set of backend systems while the sub-token of each backend system is not expired or revoked. For example, the application *APP* may retrieve data from each backend system of the set of backend systems while the sub-token of each backend system is not expired or revoked. The retrieved data may be data requested by the user. The retrieved data may be sent by the application *APP* to the user.

In one example, the supertoken may comprise a set of claims for the set of backend systems respectively, wherein each claim comprises a key-value pair, wherein the value is a sub-token of the respective backend system and the key is a unique identifier of the respective backend system. In one example, the supertoken may be a *L* × 2 matrix, wherein L is the number of rows which may be at least equal to the number of set of backend systems and 2 refers to the two columns of the matrix. The first column of the matrix may comprise a series of sub-tokens and the second column of the matrix may comprise keys, wherein each of the key may uniquely identifying a respective backend system. Each key may comprise a respective identification number unique to a respective backend system. When the supertoken is received by a backend system, then the respective backend system reads through the second column of the matrix, until it finds the key comprising the identification number corresponding or referring to that particular backend system. If the matching key corresponds to a m^{th} row of the matrix, then the backend system applies at least one verification test for validating the sub-token of the corresponding m^{th} row and the first column of the matrix.

The present subject matter may further improve the security of the distributed manufacturing automation system by controlling access to the application *APP.* The access to the application *APP* may, for example, be limited to a list of selected users. The selected users may, for example, be colleagues from asset monitoring solutions of the distributed manufacturing automation system. The application *APP* may reject token requests or data access requests from a user who is not part of the selected users. The list of selected users may, for example, be updated on a periodic basis e.g., every month. Thus, in one example, the method comprises performing the present method in case the user is one of the selected users that are allowed to access the application *APP.* This may also improve information exchange and provide better and more facilitated access to data. For example, the application *APP* may comprise a user code, so that a particular user or a group of users having the user code are able to access the application *APP.*

The present subject matter may further improve the security of the distributed manufacturing automation system by using encryption. In one example, the supertoken may be encrypted in accordance with a first encryption protocol. In one example, the communication to and from the application *APP* may be encrypted in accordance with a second encryption protocol. The first encryption protocol may be the second encryption protocol. This may be advantageous as it may enable uniform processing and communication of data to and from the application *APP.* Alternatively, the first encryption protocol may be different from the second encryption protocol.

This may be advantageous as it may improve the security. Each protocol of the first encryption protocol and the second encryption protocol may comprise any one of: JWT protocol, Transport Layer Security (TLS) protocol, Advanced Encryption Standard (AES) protocol, Data Encryption Standard (DES) protocol, and International Data Encryption Algorithm (IDEA) protocol.

The application *APP* may be provided as an application programming interface (API) having endpoints that enable at least to: request sub-tokens from the set of backend systems, verify the sub-tokens at the set of backend systems and retrieve data from the set of backend systems. The endpoints may, for example, be provided as methods which are defined in the application *APP* and implemented in the set of backend systems.

The present subject matter may enable an efficient access to data in the backend systems by running the application *APP* in accordance with a client-server model. In one example, the application *APP* may comprise a client application and server applications in the set of backend systems respectively. The client application is configured, in accordance with a client-server model, with each server application of the server applications. The client application may directly invoke a method in each sever application of the server applications, wherein the method may be a token verification method, a data retrieval method etc. For example, the client-server model may be provided using a GOOGLE Remote Procedure Call (gRPC) framework or a Representational state transfer (REST) framework. Using the gRPC framework may be advantageous as it may enable streaming of data to and/or from the backend systems. The present subject matter may enable to use the client-server model in which the client application and server applications may run in a variety of environments and be implemented in various programming languages. For example, the client application may be implemented in a programming language that is different from the programming language used for the server application.

In one example, the source level and the target level are consecutive levels of the automation pyramid. In one example, the target level comprises OT systems. The source level may, for example, be the fourth level of the automation pyramid and the target level may, for example, be the third level of the automation pyramid.

In one example, the supertoken may be a data structure. The data structure may be a software token that may be stored in a storage medium. The storage medium may, for example, be part of a hardware token device. The hardware token device may be configured so that the data structure may be read from the hardware token device e.g., by a computer. For example, the hardware token device may, for example, be a pluggable memory such as a memory chip.

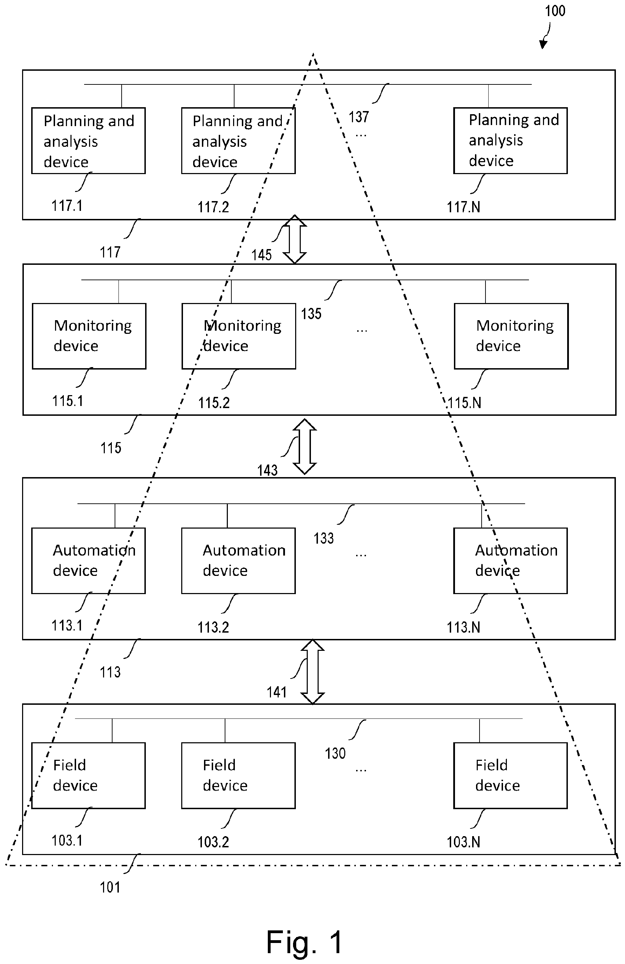

**FIG. 1** depicts a distributed manufacturing automation system in accordance with an example of the present subject matter.

As indicted in FIG. 1, the distributed manufacturing automation system 100 is configured according to a hierarchical pyramidal model. The hierarchical pyramid model may be the ISA-95 pyramid model. With this configuration, different groups of devices are connected over respective networks and the data is communicated between the manufacturing facility and the groups of devices following a predefined data flow using specific connections.

The distributed manufacturing automation system 100 is organized in different levels 101, 113, 115 and 117 of the hierarchical pyramidal model. The first level 101 comprises field devices 103.1 through 103.N. The field devices 103.1-N may include sensors, meters, motor drives, industrial robots, vision cameras, actuators or other such field devices. The field devices 103.1-N may be used to monitor and/or control one or more manufacturing processes. The field devices 103.1-N may be configured to transfer the data of the manufacturing process to the second level 113. The field devices 103.1-N may be used to control one or more manufacturing processes. For that, the field devices 103.1-N may be configured to generate and/or collect process data relating to control of the manufacturing process. The field devices 103.1-N may be configured to transfer the process data of the manufacturing process to devices of other levels. For example, the manufacturing parameters of the manufacturing process may be controlled through actuators based on the analysis. The manufacturing process may refer to the steps of a method used to prepare a composition in a manufacturing batch amount. A manufacturing process may, for example, include a joining process and/or shearing and forming process and/or molding process and/or machining process. The manufacturing process may have one or more configurable manufacturing parameters such as mixing rate, temperature etc. Different types of control of the manufacturing process may be used. Each type of control of the manufacturing process may comprise an analysis step for analyzing of one or more manufacturing properties of the manufacturing process and a control step for adjusting one or more manufacturing parameters of the manufacturing process based on the analysis. The manufacturing property of the manufacturing process may, for example, comprise duration, temperature, pressure, speed, quantity etc. The analysis step may comprise monitoring and/or processing of process data of the manufacturing process. The different types of control may differ, for example, in the type of the analysis performed and/or in the required time frame of the control e.g., one or more manufacturing parameters of the manufacturing process may need to be controlled in real-time in order to meet required performance. Each type of control of the manufacturing process may require specific input data. The input data may comprise values of one or more manufacturing properties which may be obtained directly from the acquired process data or be obtained after pre-processing the process data. In addition, each type of control of the manufacturing process may have different processing resource requirement.

The second level 113 comprises automation devices 113.1-N. The automation devices 113.1-N may comprise CNC machines, PLCs, etc. The automation devices 113.1-N may receive the data including manufacturing properties from various sensors and may drive actuators based on the processed sensor signals and program or control technique. The field devices 103.1-N together with the automation devices 113.1-N may form an automation system. Examples of automation systems may include a batch control system, continuous control system, or discrete control system. The third level 115 comprises monitoring devices 115.1-N. The monitoring devices 115.1-N facilitates intervening functions, supervising various manufacturing properties, setting production targets, historical archiving, setting machine start and shutdown, etc. The monitoring devices 115.1-N may, for example, comprise DCS devices or SCADA devices. The fourth level 117 comprises planning and analysis devices (PA devices) 117.1-N. The planning and analysis devices 117.1-N may be configured to perform production planning, customer and market analysis, orders and sales, machine learning etc.

The devices within each level of the distributed manufacturing automation system 100 may be connected with each other over a respective network which is adapted to transmit data with the aid of a standard protocol. For example, the field devices 103.1-N may be connected with each other over a network 130. The automation devices 113.1-N may be connected with each other over a network 133. The monitoring devices 115.1-N may be connected with each other over a network 135. The planning and analysis devices 117.1-N may be connected with each other over a network 137.

The field devices 103.1-N may communicate with the automation devices 113.1-N via a connection 141. The connection 141 may be an analogue connection, field bus based connection or Ethernet based connection. The automation devices 113.1-N may communicate with the monitoring devices 115.1-N via a connection 143. The connection 143 may be an Ethernet based connection. The monitoring devices 115.1-N may communicate with the planning and analysis devices 117.1-N via a connection 145. The connection 145 may be an Ethernet based connection. Each of the connections 141, 143 and 145 may be provided with a firewall that controls the communication of the data through the respective connection.

The devices of the distributed manufacturing automation system 100 may cooperate according to this hierarchical pyramidal model in order to perform different types of control of the manufacturing process. For example, using the system 100, an operating division of a chemical company may monitor its production quality and actively react to product quality issues by automatically generating feedback to the automation system.

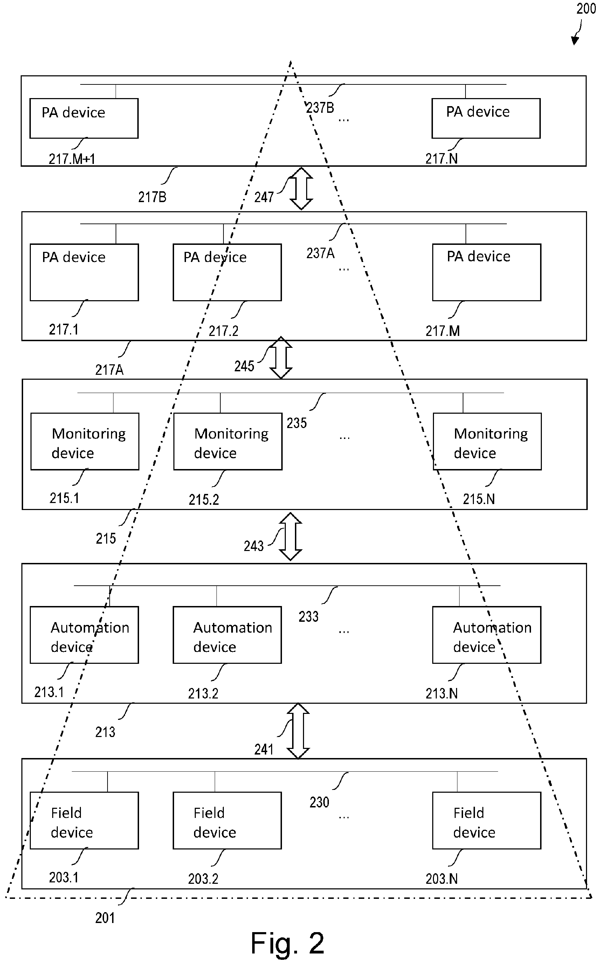

**FIG. 2** depicts a distributed manufacturing automation system in accordance with an example of the present subject matter.

As indicted in FIG. 2, the distributed manufacturing automation system 200 is configured according to a hierarchical pyramidal model. The hierarchical pyramid model may be the ISA-95 pyramid model. With this configuration, different groups of devices are connected over respective networks and the data is communicated between the manufacturing facility and the groups of devices following a predefined data flow using specific connections.

The distributed manufacturing automation system 200 is organized in different levels 201, 213, 215, 217A and 217B of the hierarchical pyramidal model. The first level 201 comprises field devices 203.1 through 203.N. The field devices 203.1-N may include sensors, meters, motor drives, industrial robots, vision cameras, actuators or other such field devices. The field devices 203.1-N may be used to monitor and/or control one or more manufacturing processes. The field devices 203.1-N may be configured to generate and/or collect process data relating to control of the manufacturing process. The field devices 203.1-N may be configured to transfer the data of the manufacturing process to the second level 213. The second level 213 comprises automation devices 213.1-N. The automation devices 213.1-N may comprise CNC machines, PLCs, etc. The automation devices 213.1-N may receive the data including manufacturing properties from various sensors and may drive actuators based on the processed sensor signals and program or control technique. The third level 215 comprises monitoring devices 215.1-N. The monitoring devices 215.1-N facilitates intervening functions, supervising various manufacturing properties, setting production targets, historical archiving, setting machine start and shutdown, etc. The monitoring devices 215.1-N may, for example, comprise DCS devices or SCADA devices. The fourth and fifth levels 217A and 217B comprise planning and analysis devices 217.1-N. The planning and analysis devices 217.1-N may be configured to perform production planning, customer and market analysis, orders and sales, machine learning etc. By contrast to the system of FIG. 1, part of the planning and analysis devices 217.M+1-N may be implemented in a cloud platform to leverage cloud-based applications and services. The cloud platform may, for example, be provided by a cloud provider as a platform-as-a-service (PaaS). Hence, a subgroup 217.1 to 217.M of the of PA devices 215 may be implemented as a local data center using the network 237A and the remaining subgroup 217.M+1 to 217.N may be implemented in the cloud platform using a network 237B. The devices in the cloud platform may be configured to communicate through the internet 247 in order to exchange data with other devices of the system 200. The devices of the local data centers as well as the devices of the cloud platform may cooperate in order to perform different types of control of the manufacturing process.

The devices within each level of the distributed manufacturing automation system 200 may be connected with each other over a respective network which is adapted to transmit data with the aid of a standard protocol. For example, the field devices 203.1-N may be connected with each other over a network 230. The automation devices 213.1-N may be connected with each other over a network 233. The monitoring devices 215.1-N may be connected with each other over a network 235. The planning and analysis devices 217.1-M may be connected with each other over a network 237A. The planning and analysis devices 217.M+1-N may be connected with each other over a network 237B.

The field devices 203.1-N may communicate with the automation devices 213.1-N via a connection 241. The connection 241 may be an analogue connection, field bus based connection or Ethernet based connection. The automation devices 213.1-N may communicate with the monitoring devices 215.1-N via a connection 243. The connection 243 may be an Ethernet based connection. The monitoring devices 215.1-N may communicate with the planning and analysis devices 217.1-M via a connection 245. The connection 245 may be an Ethernet based connection. The planning and analysis devices 217.1-M may communicate with the planning and analysis devices 217.M+1-N via a connection 247. The connection 247 may be an internet connection. Each of the connections 241, 243, 245 and 247 may be provided with a firewall that controls the communication of the data through the respective connection.

The devices of the distributed manufacturing automation system 200 may cooperate according to this hierarchical model in order to perform different types of control of the manufacturing process. For example, using the system 200, an operating division of a chemical company may monitor its production quality and actively react to product quality issues by automatically generating feedback to the automation system.

In one example implementation, the system of FIG. 2 may further be provided with a Namur Open Architecture (NOA).

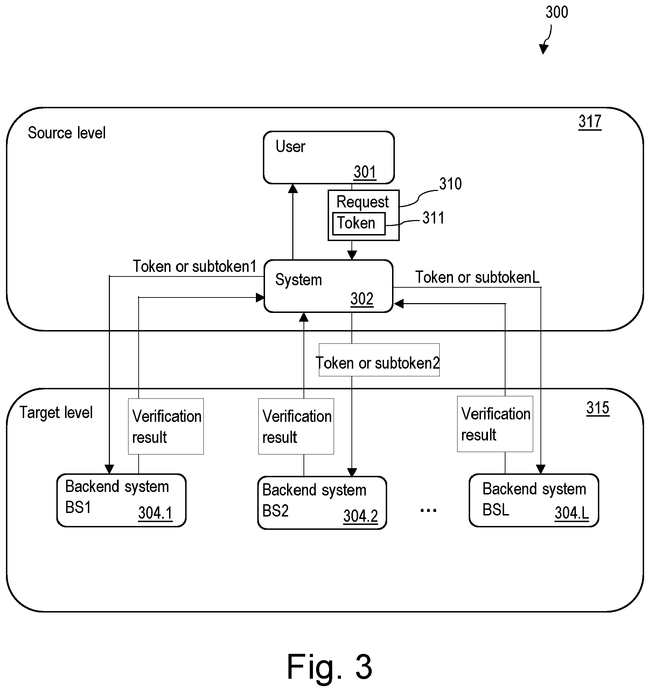

**FIG. 3** depicts a computer system for data enablement in accordance with an example of the present subject matter.

The computer system 300 comprises a system 302, named first system, and a set of backend systems 304.1 through 304.L. The first system 302 may, for example, be part of a given level 317 of the automation pyramid. The level 317 may be referred to as source level. The source level may, for example, be the level 117 or 217A of FIG. 1 and FIG. 2 respectively. The first system 302 may, for example, comprise any device of the PA devices which are described with reference to FIG. 1 and FIG. 2.

The set of backend systems 304.1 through 304.L may be part of a level 315 which is different from the level 317 of the first system 302. The level 315 may be referred to as target level. However, such a source level 317 and such a target level 315 may be the same level, or an identical level respectively. The target level may, for example, be the level 115 or 215 of FIG. 1 and FIG. 2 respectively. Each backend system of the set of backend systems 304.1 through 304.L may, for example, comprise any device of the monitoring devices which are described with reference to FIG. 1 and FIG. 2.

The first system 302 may enable access to data of the set of backend systems 304.1 through 304.L. For example, a user 301 of the first system 302 may send a data access request 310 to the first system 302 for accessing data in the set of backend systems 304.1 through 304.L. The data access request 310 comprises a token 311 comprising a set of sub-tokens subtoken1,..., subtokenL for authentication of the user 301 against the set of backend systems 304.1 through 304.L respectively. The data access request 310 may further indicate a request of data to be retrieved from the set of backend systems 304.1 through 304.L. Upon receiving the data access request 310, the first system 302 may send the set of sub-tokens to the set of backend systems 304.1 through 304.L. The first system 302 may send to each backend system the sub-token of the backend system or the (whole) token 311. If a backend system receives the whole token, it may extract the respective sub-token from the token 311. This process of sending the sub-tokens is indicated by the arrows from the first system 302 toward the set of backend systems 304.1 through 304.L respectively. Each backend system of the set of backend systems 304.1 through 304.L may perform a verification of the respective sub-token and may send the result of the verification e.g., as a verification value, to the first system 302. This is indicated by the arrows from the set of backend systems 304.1 through 304.L toward the first system 302. The first system 302 may receive from the set of backend systems 304.1 through 304.L the set of verification values respectively. The verification value may, for example, be a first value indicating that the authentication against the backend system is successful or a second value indicating that the authentication against the backend system is unsuccessful. The first system 302 may use the set of verification values for authenticating the user 301 against the set of backend systems 304.1 through 304.L respectively. This authentication may be referred to as a combined authentication.

For example, if all the verification values are first values, meaning that the user is authenticated against the set of backends systems, the first system 302 may determine that the combined authentication is successful. However, if the set of verification values comprise at least one second value, meaning that the user is not authenticated against at least one backend system, the first system 302 may determine that the multi-combined authentication is unsuccessful. Alternatively, if the set of verification values comprise at least one first value, the first system 302 may determine that the combined authentication is successful.

In case the combined authentication by the first system 302 is successful against all the backend systems 304.1 through 304.L, the first system 302 may, for example, retrieve data that is requested by the user 301 from the set of backend systems 304.1 through 304.L. Alternatively, in case the combined authentication is successful for a subset of the set of backend systems 304.1 through 304.L, the first system 302 may, for example, retrieve data that is requested by the user 301 from said subset of backend systems. In case the combined authentication is not successful, the first system 302 may reject the data access request of the user 301.

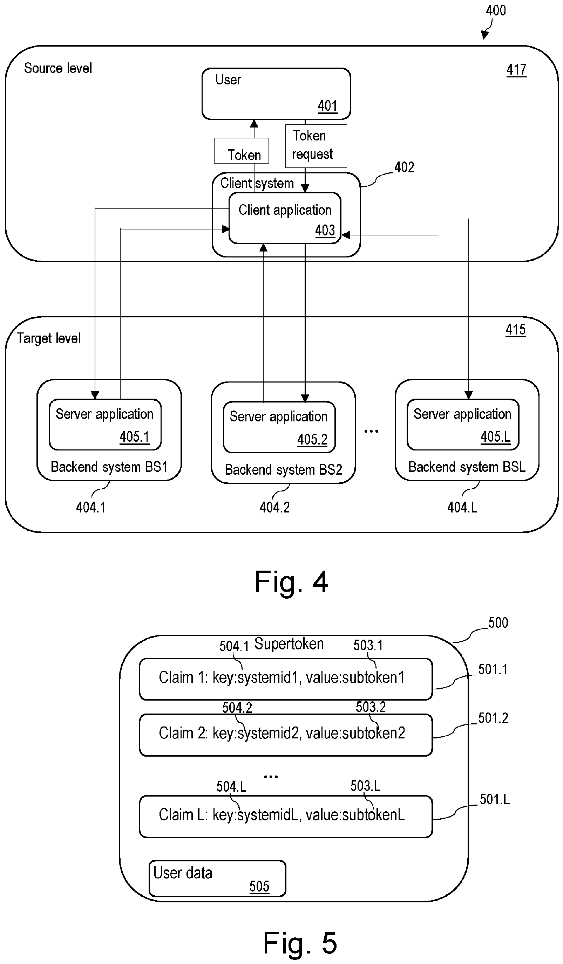

In alternative example, the computer system 300 may be used to generate the token 311 for the user 301. For that, the first system 302 may request (and receive from) each of the set of backend systems 304.1 through 304.L a sub-token for authentication of the user 301 against the backend system. The first system 302 may use the sub-tokens to create the token 311 and send the token 311 to the user 301. FIG. 5 shows an example implementation of the token 311.

**FIG. 4** depicts a computer system for generating a token in accordance with an example of the present subject matter.

The computer system 400 comprises a client system 402 and a set of backend systems 404.1 through 404.L. The client system 402 may, for example, be part of a given level 417 of the automation pyramid. The level 417 may be referred to as source level. The source level may, for example, be the level 117 or 217A of FIG. 1 and FIG. 2 respectively. The client system 402 may, for example, comprise any device of the PA devices which are described with reference to FIG. 1 and FIG. 2.

The set of backend systems 404.1 through 404.L may be part of a level 415 which is different from the level 417 of the client system 402. The level 415 may be referred to as target level. The target level may, for example, be the level 115 or 215 of FIG. 1 and FIG. 2 respectively. Each backend system of the set of backend systems 404.1 through 404.L may, for example, comprise any device of the monitoring devices which are described with reference to FIG. 1 and FIG. 2.

The client system 402 and each backend system of the set of backend systems 404.1 through 404.L may be configured in accordance with a client-server model. For that, the client system 402 may comprise a client application 403 and the set of backend systems 404.1 through 404. L may comprise the server applications 405.1 through 405.L respectively. The client application 403 and corresponding server applications may, for example, be provided as an API enabling the user 401 to access data in the set of backend systems 404.1 through 404.L. The client application 403 may provide endpoints in the form of methods e.g., for creating tokens, retrieving data etc. The methods may be implemented at each server application of the server applications 405.1 through 405.L. The client application 403 may directly invoke these methods to be executed by the application servers 405.1 through 405.L.

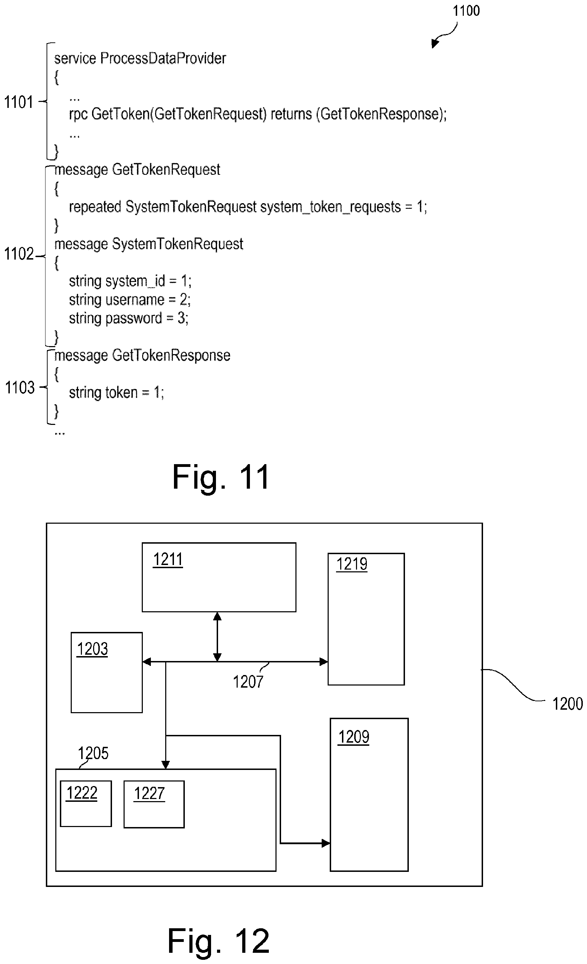

In this example of FIG. 4, the method may, for example, comprise a sub-token creation method for creating a sub-token and for sending the created sub-token. The arguments of the method and the return value of the method may, for example, be defined by declaring their types and sizes etc. The arguments of the method may, for example, comprise user data such as credentials of the user, and an indication of each backend system that needs to generate the sub-token based on the user data. The return value may be the sub-token generated by each backend system. FIG. 11 shows an example implementation of the definition of a method and the definition of its arguments and return value.

The user 401 may, for example, invoke the method through the client application 403 in order to be executed by each server application of the server applications 405.1 through 405.L. This may be performed by generating one or more calls of the method of the client application 402 by the user 401. In response to the call(s), the client application 402 may trigger or control each server application of the set of backend systems 404.1 through 404.L to execute the sub-token creation method. This may result in the client application 402 receiving the set of sub-tokens subtoken1... subtokenL from the server applications 405.1 through 405.L respectively. The client application 402 may generate a token (e.g., as shown in FIG. 5), named supertoken, that wraps the received sub-tokens subtoken1...subtokenL. The client application 402 may send the supertoken to the user 401.

**FIG. 5** shows an example implementation of a token such as the supertoken 500. The supertoken 500 may be a data structure representing a software token. The supertoken 500 comprises claims 501.1 through 501.L for the set of backend systems 404.1 through 404.L respectively.

Each claim of the claims 501.1 through 501.L comprises a key-value pair, wherein the key comprises an identifier of the corresponding backend system and the value comprises the sub-token for authentication against the corresponding backend system. This is indicated in FIG.5 where the keys comprise systemid1... systemidL which are identifiers 504.1 through 504.L of the set of backend systems 404.1 through 404.L respectively. The values comprise the sub-tokens 503.1 through 503.L for authentication against the set of backend systems 404.1 through 404.L respectively. The supertoken 500 may optionally further comprise user data 505 for authentication of the user 401 against the application 402.

In one example implementation, the supertoken may be a *L* × 2 table, wherein L is the number of rows of the table which may be at least equal to the number of the set of backend systems and 2 refers to the two columns of the table. The first column of the table may comprise a series of sub-tokens and the second column of the matrix may comprise keys, wherein each of the key may uniquely identifying a respective backend system. Each key may comprise a respective identification number unique to a respective backend system. When the supertoken is received by a backend system, then the respective backend system reads through the second column of the table, until it finds the key comprising the identification number corresponding or referring to that particular backend system. The reading of each key may be performed from a memory of the backend system using a memory address of the key. The memory address of the key may be obtained based on the structure of the table e.g., the memory address of the key may be obtained using the position of the table cell associated with the key and its relation with other cells of the table. If the matching key corresponds to a m^{th} row of the table, then the backend system applies at least one verification test for validating the sub-token of the corresponding m^{th} row and the first column of the matrix. The backend system may determine the memory address of the sub-token based on the found key and the structure of the table. The backend system may read the sub-token from the memory using the determined memory address.

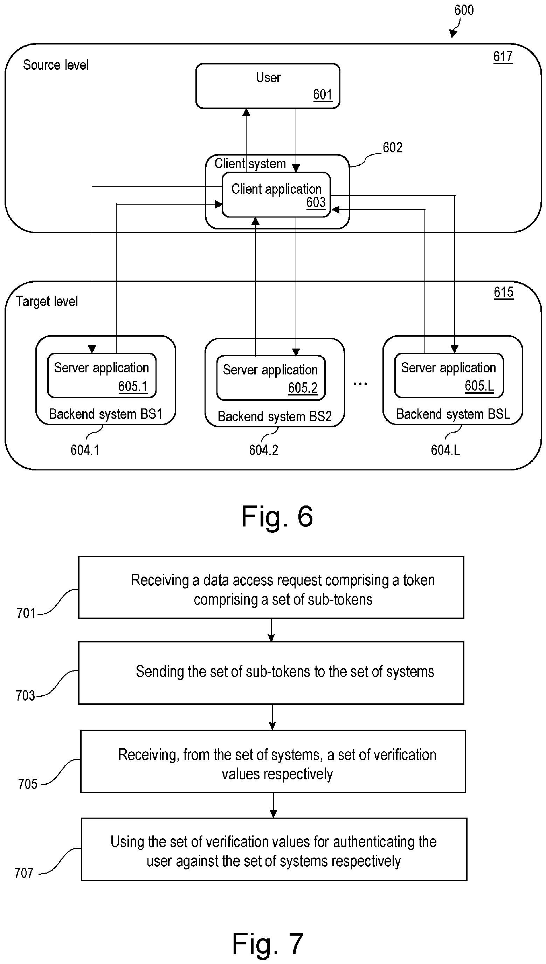

FIG. 6 depicts a computer system for data enablement in accordance with an example of the present subject matter.

The computer system 600 comprises a client system 602 and a set of backend systems 604.1 through 604.L. The client system 602 may, for example, be part of a given level 617 of the automation pyramid. The level 617 may be referred to as source level. The source level may, for example, be the level 117 or 217A of FIG. 1 and FIG. 2 respectively. The client system 602 may, for example, comprise any device of the PA devices which are described with reference to FIG. 1 and FIG. 2.

The set of backend systems 604.1 through 604.L may be part of a level 615 which is different from the level 617 of the client system 602. The level 615 may be referred to as target level. The target level may, for example, be the level 115 or 215 of FIG. 1 and FIG. 2 respectively. Each backend system of the set of backend systems 604.1 through 604.L may, for example, comprise any device of the monitoring devices which are described with reference to FIG. 1 and FIG. 2.

The client system 602 and each backend system of the set of backend systems 604.1 through 604.L may be configured in accordance with a client-server model. For that, the client system 602 may comprise a client application 603 and the set of backend systems 604.1 through 604.L may comprise the server applications 605.1 through 605.L respectively. The client application 603 may, for example, be provided as an API enabling the user 601 to access data in the set of backend systems 604.1 through 604.L. The client application 603 may provide endpoints in the form of methods e.g., for creating tokens, retrieving data etc. The client application 603 may directly invoke these methods to be executed by the application servers 605.1 through 605.L.

In this example of FIG. 6, the methods may, for example, comprise a data retrieval method for retrieving data. The arguments of the method and the return value of the method may, for example, be defined by declaring their types and sizes etc. The arguments of the method may, for example, comprise types and amount of data needed by the user, the supertoken, and an indication of each backend system that needs to provide the data. The return value may be the requested data. FIG. 11 shows an example implementation of the definition of a method and definition of its arguments and return value.

The user 601 may, for example, invoke this data retrieval method in order to be executed by each server application of the server applications 605.1 through 605.L. This may be performed by generating one or more calls of the data retrieval method of the client application 602 by the user 601. In response to the call(s), the client application 602 may trigger or control each server application of the set of backend systems 604.1 through 604.L to execute the data retrieving method. This may result in the client application 602 receiving the requested data from the server applications 605.1 through 605.L respectively. The client application 602 may forward the data to the user 601.

FIG. 7 is a flowchart of a method for data enablement in a distributed manufacturing automation system in accordance with an example of the present subject matter. For the purpose of explanation, the method of FIG. 7 may be implemented in the system illustrated in previous FIG. 3, but is not limited to this implementation. The method of FIG. 7 may, for example, be performed by the system 302.

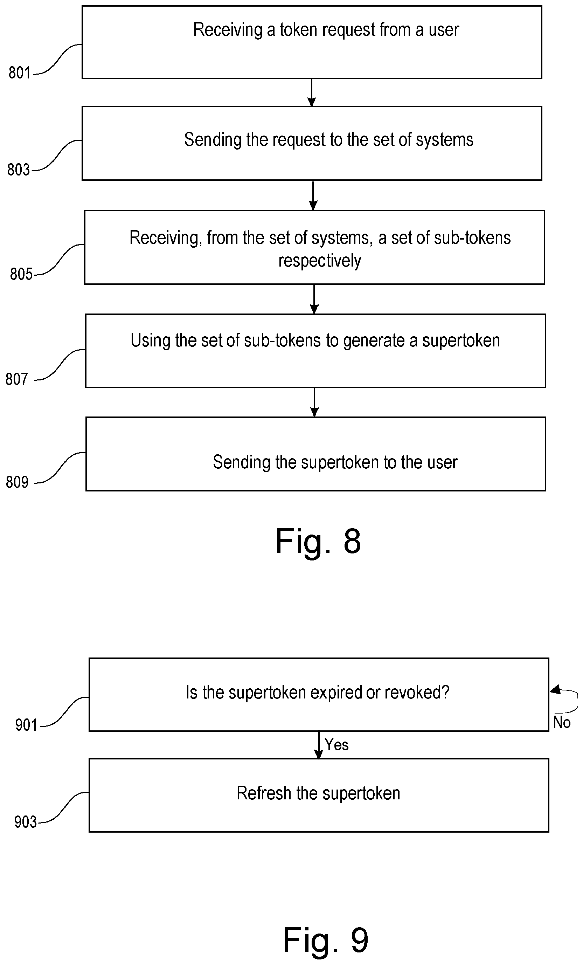

A data access request may be received in step 701 from a user 301. The data access request may be to access data in a set of backend systems 304.1 through 304.L. The data access request comprises a supertoken comprising sub-tokens for authentication against the set of backend systems 304.1 through 304.L respectively. The token may be obtained by the user 301 as described, for example, with reference to FIG. 8.

The sub-tokens comprise user data *UD*₁*,* ... and *UD_{L}* respectively for authentication of the user against the set of backend systems 304.1 through 304.L respectively. The supertoken may optionally further comprise user data *UD*₀ to authenticate the user by the application *APP.* The user data *UD*₀*, UD*₁*,* ... and *UD_{L}* may be at least partially different. This may enable a secure authentication because it may be based on different user identifying information such as user name, user address, user ID etc. Alternatively, the user data *UD*₀*, UD*₁*,* ... and *UD_{L}* may be the same user data.

The set of sub-tokens may be sent in step 703 to the set of backend systems 304.1 through 304.L. The system 302 may, for example, send to each backend system of the set of backend systems 304.1 through 304.L a sub-token associated with the backend system or send the (whole) token. If a given backend system receives the token the given backend system may get or extract from the token the sub-token associated with the given backend system. In one example, the system 302 may authenticate the user 301 using the user data *UD*₀ of the supertoken, and only if it is authenticated, remaining steps 703 to 707 may be performed. Alternatively, the system 302 may authenticate the user 301 using the user data *UD*₀ of the supertoken after performing steps 703 to 707. Alternatively, the system 302 may not authenticate the user 301 using the supertoken.

The reception of the sub-token or of the token by a given backend system may automatically trigger the verification test in the given backend system and the sending of the result of the verification to the system 302. Alternatively, the submitted token or sub-token may be part of a control command that is sent by the system 302 in step 703, that is, sending the set of sub-tokens in step 703 comprises sending the control command to the set of backends systems, wherein the control command comprises the set of sub-tokens and instructions to perform verification and provide a result of the verification. Each backend system of the set of backend systems may use the user data *UD*₁*,* ... or *UD_{L}* of the sub-token associated with the backend system for performing the authentication or verification test.

In response to the sending in step 703, a set of verification values may be received in step 705 from the set of backend systems 304.1 through 304.L respectively. The verification value may, for example, be a first value indicating that the authentication against the backend system is successful or a second value indicating that the authentication against the backend system is unsuccessful.

The set of verification values may be used for authenticating in step 707 the user 301 against the set of backend systems 304.1 through 304.L respectively. For example, if all the verification values are first values, meaning that the user is successfully authenticated against all the set of backends systems, it may be determined that the authentication is successful. However, if the set of verification values comprise at least one second value, meaning that the user is not successfully authenticated against at least one backend system, it may be determined that the authentication is unsuccessful. Alternatively, if the set of verification values comprise at least one first value, it may be determined that the authentication is successful.

Hence, based on the set of verification values (and optionally the user data *UD*₀ of the supertoken), the user may be enabled or disabled access to data in the set of backend systems 304.1 through 304.L. Alternatively, based on the set of verification values, the user may be enabled partial access to data in a subset of the set of backend systems 304.1 through 304.L against which the user has been successfully authenticated.

**FIG. 8** is a flowchart of a method for generating a supertoken in a distributed manufacturing automation system in accordance with an example of the present subject matter. For the purpose of explanation, the method of FIG. 8 may be implemented in the system illustrated in previous FIG. 3, but is not limited to this implementation. The method of FIG. 8 may, for example, be performed by the system 302.

A token request may be received in step 801 from a user 301. The token request may, for example, comprise user data identifying the user and an indication of a desired set of backend systems 304.1 through 304.L of the target level. The request may be forwarded in step 803 to each backend system of the set of backend systems 304.1 through 304.L. In response to sending the request in step 803, a set of sub-tokens may be received in step 805 from the set of backend systems 304.1 through 304.L respectively. The set of sub-tokens may be used for creating in step 807 the supertoken. The supertoken may be sent in step 809 to the user 301.

The method of FIG. 8 may be performed before performing the method of FIG. 7. The set of backend systems for which the supertoken is generated in FIG. 8 may be all systems of the target level. This may be advantageous as it may prevent generating multiple supertokens for different subsets of backend systems of the same target level. Alternatively, the set of backend systems for which the supertoken is generated in FIG. 8 may be a selected part of all systems of the target level. This may prevent unnecessary addition of entries in the supertoken which are associated with backend systems which may not be needed.

The set of backend systems for which data access is requested in the method of FIG. 7 may be the same set of backend systems for which the supertoken is created by the method of FIG. 8. Alternatively, the set of backend systems for which data access is requested in the method of FIG. 7 may be a subset of the set of backend systems for which the supertoken is created by the method of FIG. 8.

**FIG. 9** is a flowchart of a method for monitoring a supertoken in a distributed manufacturing automation system in accordance with an example of the present subject matter. For the purpose of explanation, the method of FIG. 9 may be implemented in the system illustrated in previous FIG. 3, but is not limited to this implementation. The method of FIG. 9 may, for example, be performed by the system 302.

It may be determined in step 901 whether the supertoken 500 is revoked or expired. In case the supertoken 500 is revoked or expired, it may be refreshed in step 903. Otherwise (901), the supertoken may be checked repeatedly until it is determined that it is revoked or expired. Refreshing the supertoken may comprise (re)creating the supetoken with a new lifetime or extending the lifetime of the existing supertoken.

The method of FIG. 9 may be performed before and/or after the execution of the method of FIG. 7. Additionally, or alternatively, the method of FIG. 9 may be performed concurrently with the method of FIG. 7 e.g., steps 901 to 903 may be performed after step 701 and before step 703.

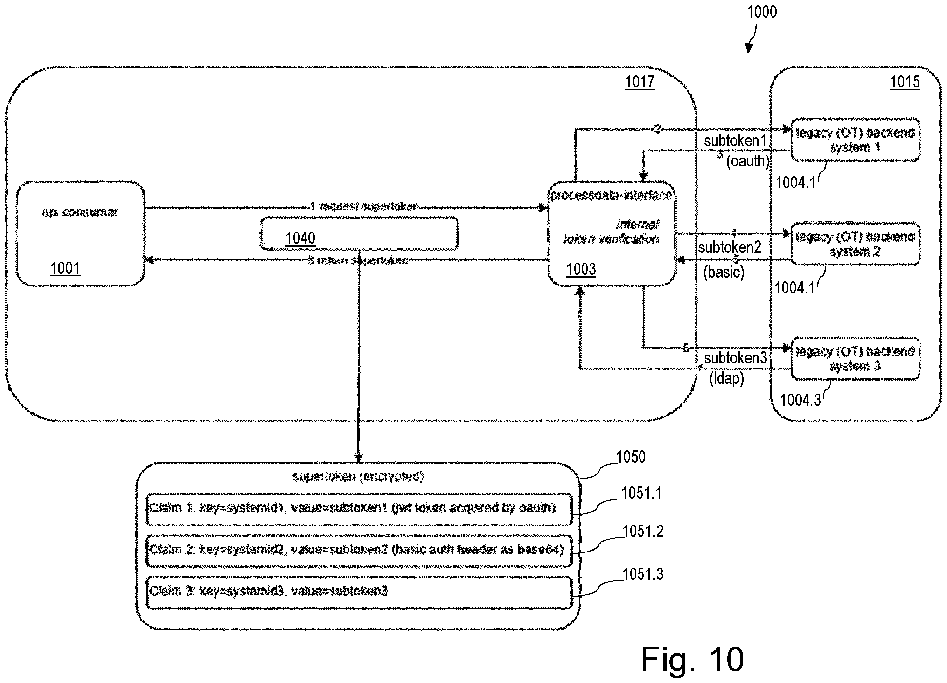

**FIG. 10** depicts a computer system for secure generation of a supertoken in accordance with an example of the present subject matter.

The computer system 1000 comprises a process data interface 1002 and a set of backend systems 1004.1, 1004.2 1004.3. The process data interface 1002 may, for example, be part of a given level 1017 of the automation pyramid. The level 1017 may be referred to as source level.

The source level may, for example, be the further level 117 or 217A of FIG. 1 and FIG. 2 respectively.

The set of backend systems 1004.1 through 1004.3 may be part of a level 1015 which is different from the level 1017 of the process data interface 1002. The level 1015 may be referred to as target level. The target level may, for example, be the third level 115 or 215 of FIG. 1 and FIG. 2 respectively. Each backend system of the set of backend systems 1004.1 through 1004.3 may, for example, comprise an OT system.

The process data interface 1002 and each backend system of the set of backend systems 1004.1 through 1004.3 may be configured in accordance with a client-server model e.g., using a gRPC framework.

In this example of FIG. 10, a consumer or user 1001 of the process data interface 1002 may send in step 1 a request for a supertoken. The data communicated between the user 1001 and the process data interface 1002 may be encrypted by a module 1040, wherein each of the user 1001 and the process data interface 1002 may decrypt the encrypted data received at the user 1001 and the process data interface 1002 respectively. In response, the process data interface 1002 may send a request of a sub-token to each of the backend systems 1004.1, 1004.2 and 1004.3 in steps 2, 4 and 6 respectively. The backend systems 1004.1, 1004.2 and 1004.3 my send the sub-tokens in steps 3, 5 and 7 respectively to the process data interface 1002. The three sub-tokens may be generated using three different authentication protocols. The sub-token subtoken1 may be provided in accordance with the OAuth protocol. The sub-token subtoken2 may be provided in accordance with the Basic access authentication protocol. The subtoken subtoken3 may be provided in accordance with the LDAP protocol. The process data interface 1002 may generate a supertoken 1050 that wraps the received sub-tokens subtoken1, subtoken2 and subtoken3. The supertoken 1050 comprises three claims 1051.1 through 1051.3 for the set of backend systems 1004.1 through 1004.3 respectively. Each claim of the claims 1051.1 through 1051.3 comprises a key-value pair, wherein the key comprises an identifier of the corresponding backend system and the value comprises the sub-token for authentication against the corresponding backend system. This is indicated in FIG. 10 where the keys comprise systemid1 ... systemid3 which are identifiers of the set of backend systems 1004.1 through 1004.3 respectively. The values comprise sub-tokens subtoken1 ... subtoken3 for authentication against the set of backend systems 1004.1 through 1004.3 respectively. The process data interface 1002 may send in step 8 the supertoken to the user 1001. The supertoken 1050 may be encrypted by the module 1040 before it is received at the user 1001. The module 1040 may, for example, comprise a reverse proxy server such as the proxy server implemented in the web server NGINX.

The process data interface 1002 may thus be of special relevance in terms of security since it may be the central point of access for reading and writing data from and to OT source systems. The token may be acquired with the computer system 1000 using an API-integrated gRPC call (and not from an external authentication system).

**Fig. 11** is a pseudocode for implementing a method for generating a supertoken according to an example of the present subject matter. In this example, the gRPC framework is used as an example implementation of the client-server model. The pseudocode 1100 comprises a definition 1101 of the method GetToken to generate the supertoken. The method GetToken accepts as argument a message named GetTokenRequest and has a return value named GetTokenResponse. The pseudocode 1100 further comprises a definition 1102 of the argument GetTokenRequest. The argument may comprise data descriptive of the server applications such as the identifiers of the backend systems that host the server applications respectively and the user data such as a user name and password. The pseudocode 1100 further comprises a definition 1104 of the return value GetTokenResponse which is a string type token.

In order to generate the supertoken, the user may perform a call of the method GetToken with the argument indicating the user data and the server applications that need to generate the sub-tokens. The method GetToken may be executed by each server application of the server applications indicated in the argument.

**Fig. 12** represents a general computerized system suited for implementing at least part of method steps as involved in the disclosure. The client system 302 or each backend system of the set of backend systems may, for example, comprise the computer system 1200. The components of the computer system 1200 may include, but are not limited to, one or more processors or processing units 1203, a storage system 1211, a memory system 1205, and a bus 1207 that couples various system components including memory system 1205 to processor 1203. Memory system 1205 may include any one or combination of volatile memory elements (e.g., random access memory (RAM, such as DRAM, SRAM, SDRAM, etc.)) and non-volatile memory elements (e.g., ROM, erasable programmable read only memory (EPROM), electronically erasable programmable read only memory (EEPROM), programmable read only memory (PROM). Note that the memory system 1205 may have a distributed architecture, where various components are situated remote from one another, but can be accessed by the processor 1203.

The software in memory system 1205 may include one or more separate programs, each of which comprises an ordered listing of executable instructions for implementing logical functions, notably functions involved in embodiments of this invention. The software in memory system 1205 shall also typically include a suitable operating system (OS) 1222. The OS 1222 essentially controls the execution of other computer programs, such as possibly software 1227 for implementing methods as described herein.

Computer system 1200 may also communicate with one or more external devices such as a keyboard, a pointing device, a display, etc.; one or more devices that enable a user to interact with computer system; and/or any devices (e.g., network card, modem, etc.) that enable computer system 1200 to communicate with one or more other computing systems. Such communication can occur via I/O interface(s) 1219. Still yet, computer system 1200 may communicate with one or more networks such as a local area network (LAN), a general wide area network (WAN), and/or a public network (e.g., the Internet) via network adapter 1209 that may comprise a Wireless and/or mobile network adapter. As depicted, network adapter 1209 communicates with the other components of computer system 1200 via bus 1207.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A `computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

`Computer memory' or 'memory' is an example of a computer-readable storage medium. Computer memory is any memory which is directly accessible to a processor. `Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. An authentication method in a distributed manufacturing automation system (100, 200), the distributed manufacturing automation system (100, 200) being configured in accordance with an automation pyramid comprising a plurality of levels, the method comprising:
receiving (701), from a user (301) of a source level (317) of the plurality of levels of the automation pyramid a data access request for data in at least one system of a set of systems (304.1-304. L) assigned to aa target level (315) of the automation pyramid the data access request including/containing a token (500), the token comprising at least one sub-token for authentication against the set of systems;
sending (703) at least one sub-token of the set of sub-tokens to the at least one system of the set of systems (304.1-304.L);
receiving (705), from the at least one system of the set of systems, at least one verification result;
using (707) the at least one verification result for authenticating the user (301) against the at least one system of the set of systems (304.1-304.L).

2. The method of claim 1, further comprising: generating the set of sub-tokens according to a set of authentication protocols respectively; the set of authentication protocols being different at least partially.

3. The method of any of the preceding claims, wherein the token has a predefined lifetime, the method further comprising:
determining whether the validity of the token is expired if the lifetime is expired or if the token is revoked; and
refreshing the token after expiration of the token;
wherein the sub-tokens are considered expired if the supertoken is expired.

4. The method of any of the preceding claims, wherein the token has a predefined lifetime, the lifetime of the token being any one of:
the shortest lifetime of the lifetimes of the set of sub-tokens;
the longest lifetime of the lifetimes of the set of sub-tokens; and
the average of the lifetimes of the set of sub-tokens.

5. The method of any of the preceding claims, further comprising: revoking the token comprising: revoking all the set of sub-tokens or revoking a subset of the set of sub-tokens.

6. The method of any of the preceding claims, further comprising: after successful authentication of the user, enabling access to data to each system of the set of systems while the sub-token of the each system is not expired or revoked.

7. The method of any of the preceding claims, wherein the token is encrypted in accordance with a first encryption protocol.

8. The method of any of the preceding claims, the method being performed by an application, wherein the communication to and from the application is encrypted in accordance with a second encryption protocol.

9. The method of any of the preceding claims, the method being performed by an application, the method further comprising determining whether the user is authorized to access the application, and in response to determining that the user is authorized to access the application performing the sending, the receiving and the authenticating.

10. The method of any of the preceding claims, further comprising: before receiving the data access request, generating the token and sending the token to the user.

11. The method of any of the preceding claims, the method being performed by a client application in accordance with a client-server model involving server applications in the set of backend systems respectively.

12. The method of any of the preceding claims, the target level being a level of Operational Technology, OT, systems.

13. A computer program product comprising a computer-readable storage medium having computer-readable program code embodied therewith, the computer-readable program code configured to implement the method of any of the preceding claims.

14. A client system (302) for a distributed manufacturing automation system, the distributed manufacturing automation system (100, 200) being configured as an automation pyramid comprising a plurality of levels, the client system being configured for:
receiving, from a user of a level (117) of the automation pyramid, herein referred to as source level, a data access request for data in a set of systems of another level (115) of the automation pyramid, herein referred to as target level, the data access request comprising a token, the token comprising a set of sub-tokens for authentication against the set of systems respectively;
sending the set of sub-tokens to the set of systems;
receiving, from the set of systems, a set of verification values respectively;
using the set of verification values for authenticating the user against the set of systems respectively.

15. A distributed manufacturing automation system (100, 200) comprising the client system of claim 14 and the set of systems.

16. A data structure being stored in a computer-readable storage medium, the data structure comprising a set of sub-tokens (503.1-L) for authentication of a user against a set of systems (304.1-L) of a distributed manufacturing automation system (100, 200) respectively.

17. The data structure of claim 16, being a software token.

18. The data structure of claim 16 or 17, the computer-readable storage medium being comprised in a hardware token device.

19. The data structure of any of the preceding claims 16 to 18, further comprising a set of identifiers (504.1-L) of the set of systems, each sub-token (503.1-L) being associated in the data structure (500) with the identifier (504.1-L) of the system that authenticates the user with the respective sub-token.

20. The data structure of any of the preceding claims 16 to 19, being configured for enabling a multi-factor authentication of the user, wherein the sub-tokens comprise system specific authentication factors, and the data structure further comprises a global authentication factor (505).
